# EUROPÄISCHE PATENTSCHRIFT

(11) **EP 2 593 415 B1**
(45) Veröffentlichungstag und Bekanntmachung des Hinweises auf die Patenterteilung: **09.03.2016**
(21) Anmeldenummer: 11736313.5
(22) Anmeldetag: 06.07.2011
(51) Int. Cl.: C05B 7/00, C05G 3/00, C05C 1/02, B01J 2/26

(54) **VERFAHREN ZUM HERSTELLEN VON AMMONIUMNITRAT ENTHALTENDEN PASTILLEN**
METHOD FOR PRODUCING TABLETS CONTAINING AMMONIUM NITRATE
PROCÉDÉ DE PRODUCTION DE PASTILLES CONTENANT DU NITRATE D'AMMONIUM

(30) Priorität: 16.07.2010 DE 102010032021
(43) Veröffentlichungstag der Anmeldung: 22.05.2013
(73) Patentinhaber: Sandvik Materials Technology Deutschland GmbH, 40549 Düsseldorf (DE)
(72) Erfinder: SCHROMM, Hans-Kurt, 71522 Backnang (DE); KLEINHANS, Matthias, 70736 Fellbach (DE)
(74) Vertreter: Patentanwälte Ruff, Wilhelm, Beier, Dauster & Partner mbB
(86) Internationale Anmeldenummer: PCT/EP2011/061396
(87) Internationale Veröffentlichungsnummer: WO 2012/007331

(56) Entgegenhaltungen:
- WO-A1-97/14665
- WO-A1-03/106376
- WO-A1-2004/039722
- WO-A1-2006/111331
- DE-A1-102007 061 408
- GB-A- 754 843
- D. H. BOOTH, V. C. VINYARD: "Density and viscosity of ammonium nitrate, ammonium nitrate-potassium chloride and ammonium nitrate-ammonium phosphate melts", JOURNAL OF APPLIED CHEMISTRY, Bd. 17, Nr. 3, 1. März 1967 (1967-03-01), Seiten 86-88, XP002660041, DOI: 10.1002/jctb.5010170307

## Beschreibung

Die Erfindung betrifft ein Verfahren zum Herstellen von Ammoniumnitrat enthaltenden Pastillen.

Ammoniumnitrat wird als Bestandteil vieler Düngemittel verwendet. Speziell wird Ammoniumnitrat als Stickstofflieferant in sogenannten NPK-Düngern verwendet, also Düngern, die Stickstoff, Phosphor und Kalium in unterschiedlichen Verhältnissen enthalten. Problematisch an Ammoniumnitrat ist vor allem dessen Eigenschaft, beim Erhitzen explodieren zu können. Diese Explosionsneigung von Ammoniumnitrat macht dessen Herstellung und Handhabung beim Herstellen von Düngermischungen problematisch.

Die internationale Offenlegungsschrift WO 2004/039722 A1 beschreibt ein Verfahren zum Herstellen von Ammoniumnitrat enthaltenden Pastillen, wobei das Vertropfen einer zwischen 5 und 8 Gewichtsprozent enthaltenden Produktschmelze vorgesehen ist. Zielsetzung ist die Herstellung von Calciumnitrat mit einem möglichst geringen Anteil an Ammoniumnitrat. Um pastilliert werden zu können, muss Calciumnitrat zwischen 5 und 8 Gewichtsprozent Ammoniumnitrat enthalten. Die Pastillierung von Calciumnitrat soll dadurch erreicht werden, dass ein Pulver als Kristallisationskern hinzugefügt wird.

Aus der internationalen Patentveröffentlichung WO 2006/111331 A1 ist ein Verfahren zum Herstellen von Harnstoff Pastillen mittels eines Tropfenformers bekannt.

Die deutsche Offenlegungsschrift DE 102007061408 A1 beschreibt die Pastillierung von Harnstoffmischungen mittels eines Tropfenformers.

Die Veröffentlichung Booth and Vinyard, Density and viscosity of ammonium nitrate salt mixture, J. APPL. CHEM., 1967, VOL. 17, March (XPO02660041) beschreibt die Dichte und Viskosität von Ammoniumnitrat.

Die internationale Patentveröffentlichung WO 03/106376 A1 beschreibt die Herstellung eines Düngers aus Harnstoffmischungen.

Die internationale Patentveröffentlichung WO 97/14665 A1 beschreibt die Herstellung eines Düngers mit einem Anteil zwischen 40 und 81 Gewichtsprozent Ammoniumnitrat mittels eines Trommelgranulators. Das Ammoniumnitrat wird dabei zusammen mit einem Anteil zwischen 6 und 50 Gewichtsprozent Gips zusammen mit Wasser dem Trommelgranulator zugeführt, der eine schräggestellte Trommel mit einer kreisförmigen Öffnung an jedem Ende aufweist. Durch das Hinzufügen von Gips soll die Explosionsgefahr bei dem gewählten Herstellungsverfahren mittels eines Trommelgranulators gering gehalten werden.

Mit der Erfindung soll ein verbessertes Verfahren zum Herstellen von Ammoniumnitrat enthaltenden Pastillen bereitgestellt werden.

Erfindungsgemäß ist hierzu ein Verfahren mit den Merkmalen von Anspruch 1 vorgesehen, zweckmäßige Weiterbildungen sind in den Unteransprüchen angegeben. Es ist ein Verfahren zum Herstellen von Ammoniumnitrat enthaltenden Pastillen mit folgenden Schritten vorgesehen: Vertropfen einer Ammoniumnitrat enthaltenden Produktschmelze, mittels eines Tropfenformers mit einer rotierenden, gelochten Trommel und einer an einer Innenseite der gelochten Trommel anliegenden Düsenleiste, so dass die Produktschmelze durch die Öffnungen der gelochten Trommel hindurchgedrückt wird, Ablegen der Produkttropfen auf einem umlaufenden Kühlband, Verfestigen der Produkttropfen während des Transports auf dem Kühlband durch Abkühlen und Abnehmen der verfestigten Produkttropfen als Pastillen vom Kühlband. Die Produkttropfen werden mit einer Temperatur von 177°C auf dem Produktband abgelegt. Die Produkttropfen werden auf dem Kühlband auf eine Temperatur von weniger als 50°C, insbesondere 40°C, abgekühlt.

Das erfindungsgemäße Verfahren erlaubt die Herstellung von Ammoniumnitrat enthaltenden Pastillen mit gleich bleibender Produktqualität und mit großem Durchsatz. Die hergestellten Pastillen lassen sich unmittelbar nach der Abnahme vom Kühlband problemlos handhaben und beispielsweise verpacken. Da die Produkttropfen beim Abnehmen bereits verfestigt sind, ist nicht zu befürchten, dass die Produkttropfen aneinanderkleben oder durch die Handhabung in sonst irgendeiner Weise beschädigt werden. Mit dem erfindungsgemäßen Verfahren ist es weiterhin möglich, die Temperaturen der Ammoniumnitrat enthaltenden Produktschmelze in einem so eng tolerierten Bereich zu halten, dass einerseits die Verarbeitung der Produktschmelze problemlos möglich ist und diese flüssig genug ist, um sich durch die Düsenleiste und die Öffnungen in der gelochten Trommel hindurchdrücken zu lassen und dass andererseits eine Explosionsgefahr des Ammoniumnitrats vermieden werden kann. Bei dem erfindungsgemäßen Verfahren wird die Temperatur der Ammoniumnitrat enthaltenden Produktschmelze darüber hinaus in einem so eng tolerierten Bereich gehalten, dass keine Gefahr der Zersetzung des enthaltenen Ammoniumnitrats besteht. Das erfindungsgemäße Verfahren verwendet eine in konventioneller Weise hergestellte und dann bereitgestellte, Ammoniumnitrat enthaltende Produktschmelze.

Eine Temperatur von 177°C hat sich insbesondere für reines Ammoniumnitrat als äußerst vorteilhaft herausgestellt. Dabei wird bewusst eine Temperatur eingestellt, die vergleichsweise nahe an der Zersetzungstemperatur von Ammoniumnitrat von 180°C liegt. Das erfindungsgemäße Verfahren erlaubt aber durch die Verwendung der rotierenden gelochten Trommel und der an der Innenseite der gelochten Trommel anliegenden Düsenleiste, die Temperatur der Produktschmelze im Wesentlichen konstant und in einem eng tolerierten Bereich zu halten.

Das Abkühlen der Ammoniumnitrat enthaltenden Produkttropfen auf dem Kühlband auf eine Temperatur von weniger als 50°C hat sich als vorteilhaft herausgestellt, da die Produkttropfen unterhalb einer Temperatur von 50°C zuverlässig verfestigt sind und auch bereits eine so unempfindliche Oberfläche aufweisen, dass sie problemlos vom Kühlband abgenommen und ohne Beschädigungen befürchten zu müssen, beispielsweise verpackt werden können.

In Weiterbildung der Erfindung ist vorgesehen, dass die Produkttropfen für einen Zeitraum von etwa 15 s auf dem Kühlband verbleiben.

Eine solche Verweildauer auf dem Kühlband reicht aus, um eine ausreichend starke Verfestigung der Produkttropfen zu erzielen und ist andererseits auch lange genug, um keine Risse durch zu schnelles Erstarren der Produktschmelze in den hergestellten Pastillen befürchten zu müssen.

In Weiterbildung der Erfindung wird eine Temperatur des Kühlbandes in einem Bereich unmittelbar stromaufwärts der Abnahmestelle höher gehalten als unmittelbar stromabwärts der Aufgabestelle.

Durch ein solches Nachheizen der Produktpastillen unmittelbar stromaufwärts der Abnahmestelle kann die Qualität der hergestellten Pastillen weiter verbessert werden und es kann beispielsweise auch die Form der Pastillen noch einmal verändert werden.

In Weiterbildung der Erfindung enthält die Produktschmelze Bentonit, Dolomit und/oder Calciumcarbonat.

Durch solche Füllstoffe kann auch bei den hergestellten Pastillen die Explosionsgefahr deutlich vermindert werden und die gefahrlose Verwendung als Dünger ist möglich.

In Weiterbildung der Erfindung enthält die Produktschmelze Kaliumchlorid.

Je nach Anwendungszweck der hergestellten Partikel bzw. Pastillen werden unterschiedliche Beimischungen verwendet, wobei überraschenderweise das erfindungsgemäße Verfahren für zahlreiche unterschiedliche Ammoniumnitrat enthaltende Mischungen geeignet ist. Speziell wird Kaliumchlorid der Produktschmelze zugesetzt, wenn ein sogenannter MOP-Dünger hergestellt werden soll.

In Weiterbildung der Erfindung enthält die Produktschmelze Sulfate, insbesondere Kaliumsulfat, Ammoniumsulfat und/oder Aluminiumsulfat.

Sulfate werden der Produktschmelze zugegeben, wenn ein sogenannter SOP-Dünger hergestellt werden soll. Auch hier erlaubt das erfindungsgemäße Verfahren überraschenderweise einen weiten Bereich an Mischungsverhältnissen und Mischungskomponenten.

In Weiterbildung der Erfindung enthält die Produktschmelze Magnesiumnitrat.

Beispielsweise wird eine Produktschmelze aus Ammoniumnitrat und 3,3% Magnesiumnitrat zu Pastillen verarbeitet.

In Weiterbildung der Erfindung enthält die Produktschmelze Phosphate, insbesondere Kaliumdihydrogenphosphat und Diammoniumhydrogenphosphat und/oder Phosphorpentoxid.

In Weiterbildung der Erfindung enthält die Produktschmelze Spurenelemente, insbesondere Schwefel, Zink und/oder Bor.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen beschriebenen Ausführungsformen lassen sich dabei in beliebiger Weise kombinieren, ohne den Rahmen der vorliegenden Erfindung zu überschreiten. In den Zeichnungen zeigen:

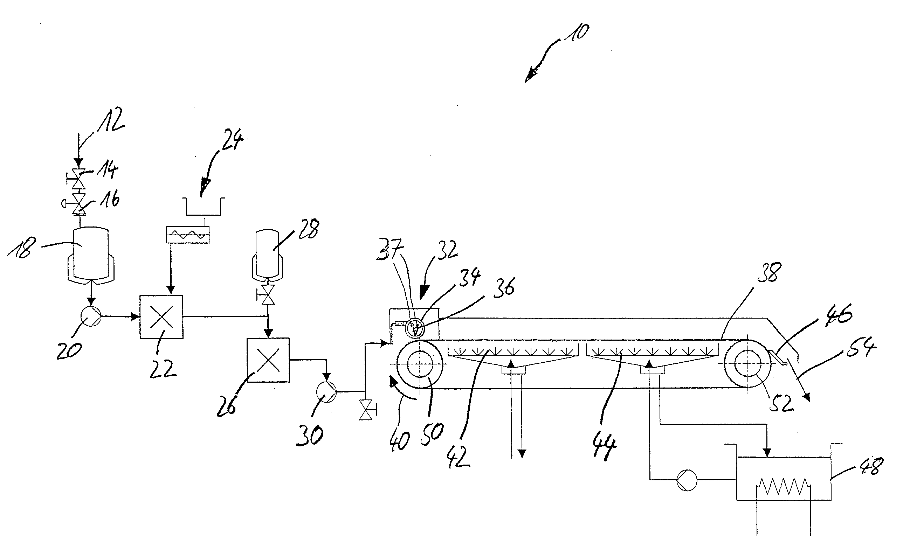

- Fig. 1: eine schematische Ansicht einer Vorrichtung zum Durchführen des erfindungsgemäßen Verfahrens.

Die schematische Darstellung in der einzigen Figur zeigt eine Vorrichtung 10 zum Herstellen von Ammoniumnitrat enthaltenden Pastillen zur Durchführung des erfindungsgemäßen Verfahrens. Geschmolzenes Ammoniumnitrat oder eine Ammoniumnitrat enthaltende Produktschmelze mit mehreren Komponenten, die in konventioneller Weise hergestellt werden kann, wird gemäß einem Pfeil 12 in durch ein Nadelventil 14 und ein pneumatisches Ventil 16 in einen Behälter 18 eingebracht, der mit Pegelsensoren versehen ist. Mittels der Pegelsensoren kann ein Füllstand im Behälter 18 über eine Steuerung des pneumatischen Ventils 16 innerhalb eines vorgegebenen Bereichs gehalten werden. Eine hierzu geeignete Steuereinheit ist der Übersichtlichkeit halber nicht dargestellt. Stromabwärts eines Auslaufs des Behälters 18 ist eine Pumpe 20 vorgesehen, mit der die flüssige, Ammoniumnitrat enthaltende Produktschmelze einem Mischer 22 zugeführt wird. In dem Mischer 22 kann eine Mischung aus der flüssigen Produktschmelze und einem Feststoff hergestellt werden, der über ein Feststoffdosiersystem 24 dem Mischer 22 zugeführt wird. Sollen der flüssigen Produktschmelze keine weiteren festen Komponenten beigefügt werden, wird die flüssige Produktschmelze durch den Mischer 22 hindurchgeleitet oder der Mischer 22 entfällt vollständig.

Stromabwärts des Mischers 22 ist eine Mühle 26 vorgesehen, um gegebenenfalls noch in der Produktschmelze enthaltende Feststoffe klein zu mahlen. Stromaufwärts der Mühle 26 und in einer von der Verbindungsleitung zwischen Mischer 22 und Mühle 26 ausgehenden Stichleitung ist ein Pufferbehälter 28 vorgesehen. Dieser Pufferbehälter dient dazu, einen eventuellen Rückstau von der Mühle 26 abzufangen und auch um zu verhindern, dass die Mühle 26 gegebenenfalls leerläuft.

Stromabwärts der Mühle 26 ist eine weitere Pumpe 30 vorgesehen, um die Produktschmelze zu einem Tropfenformer 32 zu fördern. Der Tropfenformer 32 weist eine rotierende, gelochte Trommel 34 und innerhalb der rotierenden Trommel 34 eine feststehende Düsenleiste 36 auf, die mit ihren Düsenöffnungen auf der Innenseite der gelochten Trommel 34 anliegt und gegenüber der rotierenden gelochten Trommel 34 still steht. Die flüssige Produktschmelze wird durch die Düsenleiste 36 gegen die Innenseite der rotierenden Trommel 34 und durch die Öffnungen in der rotierenden Trommel 34 gedrückt. Die Produktschmelze kann dadurch durch die Öffnungen in der rotierenden Trommel hindurch gelangen, wobei dadurch entstehende Produkttropfen dann auf einem unterhalb des Tropfenformers 32 angeordneten umlaufenden Kühlband 38 abgelegt werden. Innerhalb der rotierenden Trommel 34 sind neben der Düsenleiste 36 noch Heizrohre 37 vorgesehen, um sowohl die Düsenleiste 36 als auch die rotierende Trommel 34 auf einer Temperatur zu halten, die ein Erstarren oder Kristallisieren der zu verarbeitenden Produktschmelze verhindert und die innerhalb eines eng tolerierten Bereiches liegt.

Das Kühlband 38 läuft in einer Richtung um, die mittels eines gekrümmten Pfeiles 40 angedeutet ist. Die auf dem Kühlband 38 abgelegten Produkttropfen werden auf dem Kühlband in der Darstellung der Figur nach rechts transportiert und erstarren während ihrer Bewegung auf dem Kühlband. Das Kühlband 38 wird von seiner Unterseite her mittels Sprühdüsen 42 mit Kühlwasser besprüht. Die Sprühdüsen 42 sind in einem ersten Block angeordnet und stromabwärts in Bezug auf die Umlaufrichtung des Kühlbandes 38 ist ein zweiter Block mit Sprühdüsen 44 vorgesehen. Die Sprühdüsen 44 können mit Kühlwasser einer anderen Temperatur als die Sprühdüsen 42 beaufschlagt werden, und beispielsweise können die Sprühdüsen 44 auch dazu verwendet werden, um das Kühlband 38 unmittelbar stromaufwärts einer Abnahmestelle 46 auf eine Temperatur zu bringen, die höher liegt als eine Temperatur des Kühlbandes oberhalb der Sprühdüsen 42 bzw. im Aufgabebereich unterhalb des Tropfenformers 32. Hierzu kann das mittels der Sprühdüsen 44 versprühte Kühlwasser aus einem Behälter 48 kommen, der mittels einer Heizwendel vorgeheizt werden kann.

Das Kühlband 38 ist als umlaufendes Stahlband ausgebildet und um zwei Umlenktrommeln 50, 52 gelegt. Die Umlenktrommeln 50, 52 können beispielsweise gekühlt oder beheizt sein, um eine gewünschte Temperatur des Kühlbandes 38 möglichst exakt einstellen zu können.

Nach einer Umlenkung des Kühlbandes 38 an der Umlenktrommel 52 um ungefähr 45° ist eine Abnahmevorrichtung 46 vorgesehen, die ein an dem Kühlband 38 anliegendes Abnahmemesser aufweist. Durch dieses Abnahmemesser der Abnahmevorrichtung 46 werden die verfestigten Pastillen vom Kühlband 38 abgehoben und fallen der Schwerkraft folgend entsprechend einem Pfeil 54 weiter. Die verfestigten Pastillen können dann beispielsweise aufgefangen und verpackt oder auch mittels Förderbändern weiter abtransportiert werden.

Die vom Tropfenformer 32 erzeugten Produkttropfen werden auf dem Obertrum des Kühlbandes 38 abgelegt. Im Bereich des Untertrums des Kühlbandes 38 oder im Bereich der Umlenkungen um die Umlenktrommeln 50, 52 können beispielsweise Reinigungseinrichtungen zum Säubern der Oberfläche des Kühlbandes 38 oder auch Einrichtungen vorgesehen sein, um das Kühlband 38 mit einem Trennmittel zu beschichten. Ein solches Trennmittel dient dazu, eine leichte Ablösung der verfestigten Pastillen vom Kühlband 38 zu gewährleisten.

Mit der Vorrichtung 10 konnten im Rahmen von Versuchen Pastillen aus reinem Ammoniumnitrat hergestellt werden. Eine Aufgabetemperatur der Produktschmelze, also eine Temperatur mit der die Produkttropfen die gelochte Trommel 34 des Tropfenformers 32 verlassen, und dann auf der Oberfläche des Kühlbandes 38 abgelegt werden, betrug 177°C. Die Produkttropfen verblieben dann für einen Zeitraum von etwa 15 s auf dem Obertrum des Kühlbandes 38, bis sie an der Abnahmestelle 46 angelangt waren. Die Temperatur der verfestigten Produkttropfen bzw. Pastillen an der Abnahmestelle 46 betrug etwa 40°C. Bei dieser Produkttemperatur waren die Pastillen problemlos handhabbar, ausreichend stabil gegen mechanische Belastung und es war auch kein Aneinanderkleben der vom Kühlband 38 abgenommenen Pastillen zu beobachten. Mit der Vorrichtung 10 konnten dabei in einem Testbetrieb 3500 kg Pastillen pro Stunde hergestellt werden.

Neben reinem Ammoniumnitrat wurden mit der Vorrichtung 10 weitere Ammoniumnitrat enthaltende Produktschmelzen getestet, so eine Produktschmelze aus Ammoniumnitrat und bis zu 3% Aluminiumsulfat, Ammoniumnitrat mit 3,3% Magnesiumnitrat und Ammoniumnitrat mit 9,7% Ammoniumsulfat. Eine Produktschmelze aus Ammoniumnitrat und bis zu 40% Ammoniumsulfat ist vorteilhaft.

Weiter wurden Produktschmelzen mit Ammoniumnitrat und 19,4% Kaliumsulfat getestet, wobei auch hier höhere Beimischungen von Kaliumsulfat vorgesehen sind. Diese Zusammensetzungen von Produktschmelzen wurden mit den für reines Ammoniumnitrat vorstehend genannten Prozessparametern mit gutem Ergebnis pastilliert.

Weiter wurden sogenannte NPK-Mischungen mit der Vorrichtung 10 pastilliert, wobei als Basis immer eine Ammoniumnitratschmelze als Stickstofflieferant verwendet wurde. Mit der Vorrichtung 10 und den vorstehend für reines Ammoniumnitrat genannten Prozessparametern wurden NPK-Mischungen mit Ammoniumnitrat sowie weiter Anteilen von Phophor und Kalium von 0% bis 20% getestet, insbesondere NPK-Mischungen 15-15-15, entsprechend 15% Stickstoff, 15% Phosphor, 15% Kalium, sowie NPK 25-5-5, NPK 32-4-0 und NPK 20-20-0.

Weiter wurden mit der erfindungsgemäßen Vorrichtung 10 Produktschmelzen mit Ammoniumnitrat, gegebenenfalls mit den vorstehend beschriebenen weiteren Komponenten, sowie weiter Spurenelementen getestet. Mit gutem Ergebnis wurden dabei Produktschmelzen pastilliert, die Schwefel, Zink und/oder Bor enthalten.

## Patentansprüche

1. Verfahren zum Herstellen von Ammoniumnitrat enthaltenden Pastillen mit folgenden Schritten:
- Vertropfen einer Ammoniumnitrat enthaltenden Produktschmelze mittels eines Tropfenformers (32) mit einer rotierenden, gelochten Trommel (34) und einer an einer Innenseite der gelochten Trommel (34) anliegenden Düsenleiste (36), so dass die Produktschmelze durch die Öffnungen der gelochten Trommel (34) hindurchgedrückt wird,
- Ablegen der Produkttropfen auf einem umlaufenden Kühlband (38),
- Verfestigen der Produkttropfen während des Transports auf dem Kühlband (38) durch Abkühlen und
- Abnehmen der verfestigten Produkttropfen vom Kühlband (38), wobei die Produkttropfen mit einer Temperatur von 177°C auf dem umlaufenden Kühlband (38) abgelegt werden und wobei die Produkttropfen auf dem Kühlband (38) auf eine Temperatur von weniger als 50°C, insbesondere 40°C, abgekühlt werden.

2. Verfahren nach Anspruch 1, wobei die Produkttropfen für einen Zeitraum von etwa 15 s auf dem Kühlband (38) verbleiben.

3. Verfahren nach einem der vorstehenden Ansprüche, wobei eine Temperatur des Kühlbandes (38) in einem Bereich unmittelbar stromaufwärts einer Abnahmestelle (46) höher gehalten wird als unmittelbar stromabwärts der Aufgabestelle.

4. Verfahren nach einem der vorstehenden Ansprüche, wobei die Produktschmelze Bentonit, Dolomit und/oder Calciumcarbonat enthält.

5. Verfahren nach einem der vorstehenden Ansprüche, wobei die Produktschmelze Phosphor und Kalium enthält.

6. Verfahren nach einem der vorstehenden Ansprüche, wobei die Produktschmelze Kaliumchlorid (KCl) enthält.

7. Verfahren nach einem der vorstehenden Ansprüche, wobei die Produktschmelze Sulfate, insbesondere Kaliumsulfat (K₂SO₄), Ammoniumsulfat ((NH₄)₂SO₄) und/oder Aluminiumsulfat (Al₂(SO₄)₃) enthält.

8. Verfahren nach einem der vorstehenden Ansprüche, wobei die Produktschmelze Magnesiumnitrat Mg(NO₃)₂enthält.

9. Verfahren nach einem der vorstehenden Ansprüche, wobei die Produktschmelze Phosphate, insbesondere Kaliumdihydrogenphosphat (KH₂PO₄) und Diammoniumhydrogenphosphat ((NH₄)₂HPO₄), und/oder Phosphorpentoxid (P₂O₅) enthält.

10. Verfahren nach einem der vorstehenden Ansprüche, **dadurch gekennzeichnet, dass** die Produktschmelze Spurenelemente, insbesondere Schwefel (S), Zink (Zn) und/oder Bor (B), enthält.

## Claims

1. A method for producing tablets containing ammonium nitrate, comprising the following steps:
- dripping a product melt containing ammonium nitrate by means of a drop former (32) having a rotating, perforated drum (34) and a nozzle strip (36) contacting an inner face of the perforated drum (34) so that the product melt is pressed through the openings of the perforated drum (34),
- placing the product drops onto a circulating cooling conveyor belt (38),
- solidifying the product drops during transport on the cooling conveyor belt (38) by cooling, and
- removing the solidified product drops from the cooling conveyor belt (38), wherein the product drops are placed onto the circulating cooling conveyor belt (38), at a temperature of 177° C, and wherein the product drops are cooled on the cooling conveyor belt (38) to a temperature of less than 50° C, in particular 40° C.

2. The method according to claim 1, wherein the product drops remain on the cooling conveyor belt (38) for a period of approximately 15 seconds.

3. The method according to any one of the preceding claims, wherein a temperature of the cooling conveyor belt (38) in an area immediately upstream of a removal point (46) is kept higher than immediately downstream of the placing point.

4. The method according to any one of the preceding claims, wherein the product melt contains bentonite, dolomite and/or calcium carbonate.

5. The method according to any one of the preceding claims, wherein the product melt contains phosphorus and potassium.

6. The method according to any one of the preceding claims, wherein the product melt contains potassium chloride (KCl).

7. The method according to any one of the preceding claims, wherein the product melt contains sulfates, in particular potassium sulfate (K₂SO₄), ammonium sulfate ((NH₄)₂SO₄) and/or aluminum sulfate (Al₂(SO₄)₃).

8. The method according to any one of the preceding claims, wherein the product melt contains magnesium nitrate Mg(NO₃)₂.

9. The method according to any one of the preceding claims, wherein the product melt contains phosphates, in particular potassium dihydrogen phosphate (KH₂PO₄) and diammonium hydrogen phosphate ((NH₄)₂HPO₄) and/or phosphorus pentoxide (P₂O₅).

10. The method according to any one of the preceding claims, wherein the product melt contains trace elements, in particular sulfur (S), zinc (Zn) and/or boron (B).

## Revendications

1. Procédé de fabrication de pastilles contenant du nitrate d'ammonium, comprenant les étapes suivantes :
- la mise sous forme de gouttes d'une masse fondue de produit contenant du nitrate d'ammonium au moyen d'un dispositif de formation de gouttes (32) comprenant un tambour perforé rotatif (34) et une barre de buses (36) montée sur un côté intérieur du tambour perforé (34), de sorte que la masse fondue de produit soit poussée au travers des ouvertures du tambour perforé (34),
- le dépôt des gouttes de produit sur une bande de refroidissement en circulation (38),
- la solidification des gouttes de produit pendant le transport sur la bande de refroidissement (38) par refroidissement et
- le déchargement des gouttes de produit solidifiées de la bande de refroidissement (38), les gouttes de produit étant déposées à une température de 177 °C sur la bande de refroidissement en circulation (38) et les gouttes de produit étant refroidies sur la bande de refroidissement (38) à une température inférieure à 50 °C, notamment 40 °C.

2. Procédé selon la revendication 1, dans lequel les gouttes de produit restent sur la bande de refroidissement (38) pendant une durée d'environ 15 s.

3. Procédé selon l'une quelconque des revendications précédentes, dans lequel une température de la bande de refroidissement (38) dans une zone directement en amont d'un emplacement de déchargement (46) est maintenue plus élevée que directement en aval de l'emplacement de dépôt.

4. Procédé selon l'une quelconque des revendications précédentes, dans lequel la masse fondue de produit contient de la bentonite, de la dolomite et/ou du carbonate de calcium.

5. Procédé selon l'une quelconque des revendications précédentes, dans lequel la masse fondue de produit contient du phosphore et du potassium.

6. Procédé selon l'une quelconque des revendications précédentes, dans lequel la masse fondue de produit contient du chlorure de potassium (KCl).

7. Procédé selon l'une quelconque des revendications précédentes, dans lequel la masse fondue de produit contient des sulfates, notamment du sulfate de potassium (K₂SO₄), du sulfate d'ammonium ((NH₄)₂SO₄) et/ou du sulfate d'aluminium (Al₂(SO₄)₃).

8. Procédé selon l'une quelconque des revendications précédentes, dans lequel la masse fondue de produit contient du nitrate de magnésium Mg(NO₃)₂.

9. Procédé selon l'une quelconque des revendications précédentes, dans lequel la masse fondue de produit contient des phosphates, notamment du dihydrogénophosphate de potassium (KH₂PO₄) et de l'hydrogénophosphate de diammonium ((NH₄)₂HPO₄) et/ou du pentoxyde de phosphore (P₂O₅).

10. Procédé selon l'une quelconque des revendications précédentes, **caractérisé en ce que** la masse fondue de produit contient des oligoéléments, notamment du soufre (S), du zinc (Zn) et/ou du bore (B).
